# EUROPEAN PATENT SPECIFICATION

(11) **EP 3 968 601 B1**
(45) Date of publication and mention of the grant of the patent: **08.05.2024**
(21) Application number: 20195717.2
(22) Date of filing: 11.09.2020
(51) Int. Cl.: H04L 67/125, H04L 9/40, H04L 9/12, H04L 9/32, G06F 21/31, H04W 4/44

(54) **SYNCHRONIZATION OF A COMMUNICATION BETWEEN A VEHICLE AND A BACKEND DEVICE USING A HASH MESSAGE**
SYNCHRONISATION EINER KOMMUNIKATION ZWISCHEN EINEM FAHRZEUG UND EINER BACKEND-VORRICHTUNG DURCH VERWENDUNG EINER HASH-MELDUNG
SYNCHRONISATION D'UNE COMMUNICATION ENTRE UN VÉHICULE ET UN DISPOSITIF D'ÉTAGE DE SORTIE AU MOYEN D'UN MESSAGE DE HACHAGE

(43) Date of publication of application: 16.03.2022
(73) Proprietor: VOLKSWAGEN AG, 38440 Wolfsburg (DE)
(72) Inventor: Diekelmann, Heiko, 38536 Meinersen (DE); de Bakker, Marco, 6021 ZL Budel (NL); Gajek, Markus, 30173 Hannover (DE)

(56) References cited:
- EP-A1- 1 670 213
- WO-A1-2018/091328
- CN-A- 110 213 359
- HEGDE NAYANA ET AL: "Hash Based Integrity Verification for Vehicular Cloud Environment", 2019 IEEE INTERNATIONAL CONFERENCE ON CLOUD COMPUTING IN EMERGING MARKETS (CCEM), IEEE, 19 September 2019 (2019-09-19), pages 75-79, XP033753060, DOI: 10.1109/CCEM48484.2019.00016 [retrieved on 2020-03-30]

## Description

The invention is related to a method for synchronization of a communication between a vehicle and a backend device in a vehicle-to-cloud-system, especially from the vehicle side of the system, preferably by transmitting vital information, according to the independent method claim. Further, the invention is related to an electronic control unit according to the independent device claim. Furthermore, the invention is related to a vehicle comprising a corresponding electronic control unit according to the second independent device claim. Moreover, the invention is related to a computer program product for a corresponding method according to the independent product claim.

Vehicle-to-cloud-systems are basically known, for example from DE 10 2015 200 422 A1.

Electronic control units in vehicles usually have computing units. However, these computing units are often limited in processing power and storage amount. Also, the access to programming updates or other data is sometimes combined with complications. On the other hand, cloud computers usually provide high computational power, large memory and easy access to updates as well as to other data. Vehicle-to-cloud-systems serve to provide cloud-computing applications in order to enhance vehicle functionalities for increased safety and intelligence as well as environmental and customer friendliness while adding to the comfortable and enjoyable operations. For this aim, electronic control units may send requests for certain applications to be provided within the cloud. Further, in the modern vehicle-to-cloud-systems a synchronization may be provided between the vehicle and the cloud. However, known systems do not consider or treat the situations flexibly enough, when for example the communication between the vehicle and the cloud is not possible. Also, known systems do not consider or treat the situations, when vital information have to be transmitted between the vehicle and the cloud, and when the real content of the information on the vehicle side of the system and on the cloud side of the system has to be the same. CN 110 213 359 A discloses a car-cloud push-based synchronization mechanism in a cloud master-slave architecture.

HEGDE NAYANA ET AL: "Hash Based Integrity Verification for Vehicular Cloud Environment",2019 IEEE INTERNATIONAL CONFERENCE ON CLOUD COMPUTING IN EMERGING MARKETS (CCEM), IEEE, published on 19 September 2019, discloses a hash-based data integrity verification for a vehicular cloud environment.

An object of the invention is a method for synchronization of a communication between a vehicle and a backend device in a vehicle-to-cloud-system as claimed by claim 1. Another object of the invention is a corresponding electronic control unit as claimed in claim 13. A further object is a computer program product as claimed in claim 15. Preferred embodiments are covered by the appended dependent claims.

The invention and its further developments as well as its advantages will be explained in more detail below using figures. The figures show schematically:
Fig. 1 a schematic design of a vehicle-to-cloud-system within the meaning of the invention and
Fig. 2 a schematic flow diagram of a method according to an embodiment of the invention,

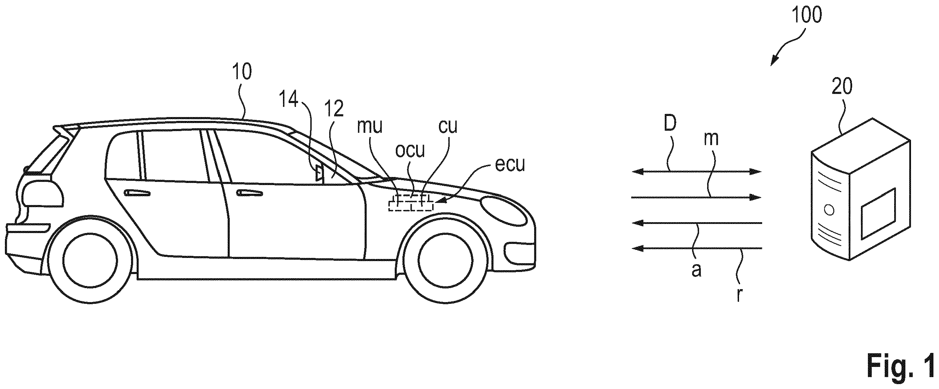

Figure 1 shows a vehicle-to-cloud-system 100 within the scope of the invention. The vehicle-to-cloud-system 100 may have at least one vehicle 10 and a backend device 20 within the cloud.

The vehicle 10 may have an electronic control unit ecu. To increase the functionality of the vehicle 10, the backend device 20 may provide high computational power, large memory and easy access to updates as well as to another data. Thus, cloud-computing applications may enhance vehicle functionalities, for example for more safety, intelligence, environmental and customer-friendly and comfortable operations as well as enjoyable operations. For this aim, the electronic control unit ecu may send requests for certain applications to be provided by the backend device 20. Also, a synchronization may be provided between the electronic control unit ecu of the vehicle 10 and the backend device 20.

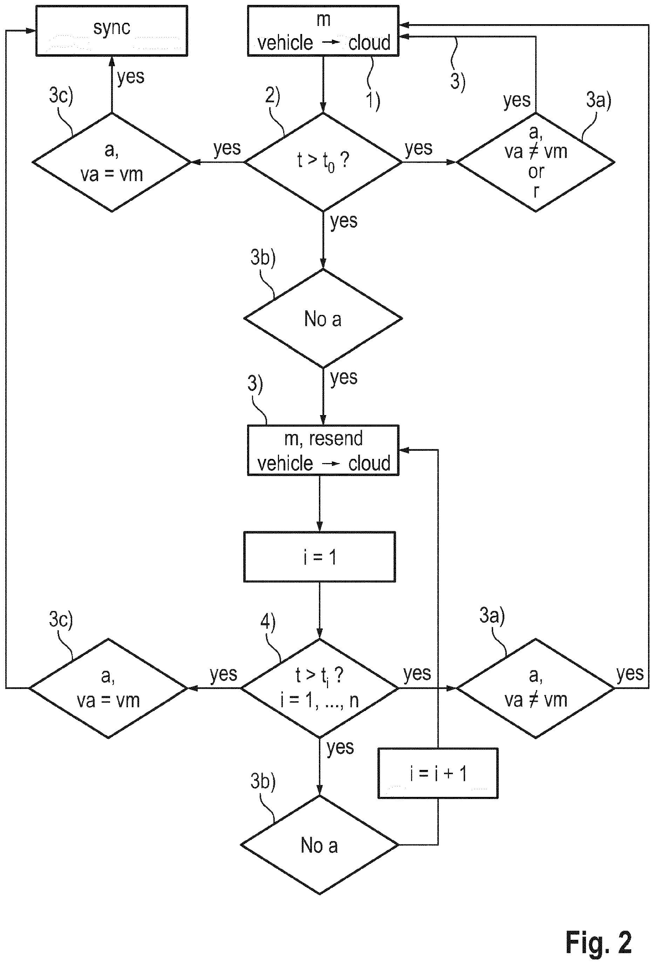

Figure 2 serves for explanation of an inventive method for synchronization a communication D between the vehicle 10 and the backend device 20 in the vehicle-to-cloud-system 100 schematically showed in figure 1, especially from the vehicle side of the system 100, preferably by transmitting vital information. The method comprises:
1) sending a hash-message m from the vehicle 10 to the backend device 20,
2) setting an inhibit value t0 for a retry timer t for receiving an acknowledgment a from the backend device 20 at the vehicle 10,
3) resending the hash-message m from the vehicle 10 to the backend device 20 after expiration of the retry timer t, when no acknowledgment a from the backend device 20 was received at the vehicle 10,
4) setting at least one new value ti for the retry timer t for receiving an acknowledgment a from the backend device 20 at the vehicle 10,
wherein steps 3) and 4) will be repeated after expiration of the retry timer t, when no acknowledgment a from the backend device 20 was received at the vehicle 10.

A hash-message m within the meaning of the invention comprises:
i) vital information itself, that is message content, for example relating to a vehicle transaction type list, a vehicle transaction activation type list and/or installed base, which are substantial or essential for the operation of the vehicle 10, and
ii) a hash value vm, so called message authentication code, which serves to authenticate the message (that is to confirm that the message came from the stated sender in the vehicle-to-cloud system 100) and to prove the data integrity (that is to verify that the vital information has not been changed, and thus to detect any changes to the message content).

For calculating hash values va, vm from the content of the hash-message m, the vehicle 10 and the backend device 20 may agree for a secret key. The vehicle 10 calculates a hash value vm for his message content (that is for a vital information) using that secret key and then sends the message content and the hash value vm to the backend device 20. The message content and the hash value vm form together the hash-message m. The backend device 20 calculates the hash value va for the received message content with that secret key and compares the calculated hash value va with the received hash value vm. If both hash values va, vm are identical, the integrity test of the received hash-message m is successful, and the backend device knows, that the hash-message m was sent by the vehicle 10 that knows the secret key, and the vital information was not changed during transmission.

An retry timer t means a transition delay timer. A retry timer t may have an inhibit value t0 defined in step 2). In step 4) a new value ti will be defined for the retry timer t. Each time step 3) will be repeated a new value ti may be assigned to the retry timer t in step 4).

The invention may provide that step 1) has at least one of the following trigger:
- ignition is on,
- motor is on,
- a successful identification of an authorized user of the vehicle 10,
- a new hash-message m is available, and/or
- leaving privacy mode.

As figure 2 indicates, the method steps may be repeated, especially starting with step 1), when during the retry timer t being set in step 2) or in step 4):
3a) the acknowledgement message a was received at the vehicle 10,
but when at least one hash-value va of the acknowledgment a does not match at least one corresponding hash-value vm of the hash-message m,
or a request r for vital information and/or vital information from the backend device 20 at the vehicle 10.

Thus, when the vehicle 10 receives messages (acknowledgments a with not matching hash-values va, vm and/or requests r) from the backend device 20, the retry timer t will not be overwritten with a new value ti and keeps its inhibit value t0 for sending the hash-message m again, starting with step 1) of the inventive method.

As figure 2 further indicates, a successful synchronization 6 of the communication D between a vehicle 10 and a backend device 20 will be confirmed,
when during the retry timer t being set in step 2) or in step 4):
3c) the acknowledgement message a was received at the vehicle 10,
and when all hash-values va of the acknowledgment a match all corresponding hash-values vm of the hash-message m.

Thus, the synchronization of a communication D between the vehicle 10 and the backend device 20 may be successfully completed.

The invention may also provide that the at least one new value ti for the retry timer t being set in step 4) has different durations according to a number of repetitions n of the steps 3) and 4), and/or the at least one new value ti for the retry timer t being set in step 4) has a longer duration with increasing number of repetitions n of the steps 3) and 4). Thus, the invention may ensure that cases are handled flexibly, when communication with the cloud is interrupted.

For example, if the vehicle 10 does not receive any acknowledgement from the backend device 20, the retry timer t may receive a new value ti in step 4) after each retry in step 3), for example:
- 30 seconds for resending the message in step 3)
- 60 seconds for 1. retry of resending, starting again with step 3),
- 120 seconds for 2. retry of resending, starting again with step 3),
- 240 seconds for 3. retry of resending, starting again with step 3),
- 480 seconds for 4. retry of resending, starting again with step 3).

Also, the hash-message m may include timestamps to prohibit the replay-attacks. Further, the hash-message m may comprise a package of messages, for which one acknowledgement a is required from the backend device 20 to increase efficiency of the communication D.

As figure 2 indicates, the steps 3) and 4) may be repeated a determined number of repetitions n, for example four times. Nevertheless, it is possible, that steps 3) and 4) will be repeated until an acknowledgment a from the backend device 20 was received at the vehicle 10.

Furthermore, a confirmation and/or adjustment possibility of the determined number of repetitions n may be provided for a user of the vehicle 10, especially by operating an input device 14 of the vehicle 10, for example a display device at a vehicle dashboard 12.

Moreover, a user of the vehicle 10 may be notified by a display device at the vehicle dashboard 12, when no acknowledgment a from the backend device 20 was received at the vehicle 10 during the retry timer t.

Also, a confirmation and/or adjustment possibility of the at least one new value ti being set in step 4) may be provided for a user of the vehicle 10, especially by operating an input device 14 of the vehicle 10, for example a display device at a vehicle dashboard 12.

Furthermore, the invention may provide that in or before the step 1) a verification may be carried out if sending is allowed according to different privacy settings. Beyond of this, in or before the step 1) a verification may be carried out if sending is possible, wherein especially a communication test to the backend device 20 is carried out.

An electronic control unit ecu comprising: a memory unit mu, in which a program code is stored, and a computing unit cu, wherein when carrying out the program code by the computing unit cu, a method is performed as described above, provides the second aspect of the invention. In other words the electronic control unit ecu is configured in such a way to execute the method as described above.

The vehicle 10 comprising a corresponding electronic control unit ecu provides the third aspect of the invention.

Another aspect of the invention may be a corresponding vehicle-to-cloud-system 100.

Also, a computer program product comprising a program code for carrying out a method as described above provides an aspect of the invention.

The above description of the figures describes the present invention only in the context of examples. Of course, individual features of the embodiments may be combined with each other, provided it is technically reasonable, without leaving the scope of the invention.

### Reference signs

- 100: vehicle-to-cloud-system

- 10: vehicle
- 12: vehicle dashboard
- 14: input device

- 20: backend device

- D: communication

- m: hash-message
- a: acknowledgement
- r: request

- va: hash value
- vm: hash value

- ecu: electronic control unit
- cu: computing unit
- mu: memory unit

- ocu: connectivity unit

- t: retry timer
- t0: inhibit value
- ti: new value
- t1: first value
- t2: second value
- t3: third value
- t4: fourth value

- n: number of repetitions
- 1: first repetition
- 2: second repetition
- 3: third repetition
- 4: fourth repetition

## Claims

1. A method for synchronization of a communication (D) between a vehicle (10) and a backend device (20) in a vehicle-to-cloud-system (100), by transmitting vital information being information that is substantial or essential for the operation of the vehicle, the method comprising:
1) sending a hash-message (m) from the vehicle (10) to the backend device (20), the hash-message comprising the vital information and one or more hash values;
2) setting an inhibit value (t0) for a retry timer (t) for receiving an acknowledgment
(a) from the backend device (20) at the vehicle (10), the acknowledgement comprising one or more hash-values to be matched against the one or more hash values of the hash-message;
3) resending the hash-message (m) from the vehicle (10) to the backend device (20) after expiration of the retry timer (t), if no acknowledgment (a) from the backend device (20) was received at the vehicle (10),
4) setting at least one new value (ti) for the retry timer (t) for receiving an acknowledgment (a) from the backend device (20) at the vehicle (10),
wherein resending the hash-message and setting at least one new value for the retry timer will be repeated after expiration of the retry timer (t), if no acknowledgment (a) from the backend device (20) was received at the vehicle (10).

2. The method according to claim 1,
**characterized in that**
sending the hash-message has at least one of the following triggers:
- ignition is on,
- motor is on,
- a successful identification of an authorized user of the vehicle (10),
- a new hash-message (m) is available, and/or
- leaving privacy mode.

3. The method according to one of the preceding claims,
**characterized in that**
sending a hash message will be repeated if, during setting or resetting the retry timer (t) the acknowledgement message (a) was received at the vehicle (10), but if at least one hash-value (va) of the acknowledgment (a) does not match
- at least one corresponding hash-value (vm) of the hash-message (m); or
- a request (r) for vital information and/or vital information from the backend device (20) at the vehicle (10).

4. The method according to one of the preceding claims,
**characterized in that**
a successful synchronization (6) of the communication (D) between a vehicle (10) and a backend device (20) will be confirmed, if during the retry timer (t) being set to the inhibit value or set to the at least one new value, the acknowledgement message (a) was received at the vehicle (10), and if all hash-values (va) of the acknowledgment (a) match all corresponding hash-values (vm) of the hash-message (m).

5. The method according to one of the preceding claims,
**characterized in that**
the at least one new value (ti) for the retry timer (t) being set to the at least one new value has different durations according to a number of repetitions (n) of resending the hash message (m) and setting the at least one new value for the retry timer (t), and/or the at least one new value (ti) for the retry timer (t) being set has a longer duration with increasing number of repetitions (n) of resending the hash message (m) and setting the at least one new value for the retry timer (t).

6. The method according to one of the preceding claims,
**characterized in that**
the hash-message (m) includes timestamps,
and/or the hash-message (m) comprise a package of messages, for which one acknowledgement (a) is required from the backend device (20).

7. The method according to one of the preceding claims, **characterized in that**
the at least one new value (ti) has a first value (t1) with respect to a first repetition (1) of resending the hash message (m) and setting the at least one new value for the retry timer (t);
the at least one new value (ti) has a second value (t2) with respect to a second repetition (2) of resending the hash message (m) and setting the at least one new value for the retry timer (t);
the at least one new value (ti) has a third value (t3) with respect to a third repetition (3) of resending the hash message (m) and setting the at least one new value for the retry timer (t);
the at least one new value (ti) has a fourth value (t4) with respect to a fourth repetition (4) of resending the hash message (m) and setting the at least one new value for the retry timer (t);
wherein the first value is smaller than the second value, the second value is smaller than the third value, and the third value is smaller than the fourth value.

8. The method according to one of the preceding claims,
**characterized in that**
resending the hash message (m) and setting the at least one new value for the retry timer (t) will be repeated a determined number of repetitions (n), especially at least four times, and/or resending the hash message (m) and setting the at least one new value for the retry timer (t) will be repeated until an acknowledgment (a) from the backend device (20) is received at the vehicle (10).

9. The method according to one of the preceding claims,
**characterized in that**
a confirmation and/or adjustment possibility of a determined number of repetitions (n) is provided for a user of the vehicle (10), especially by operating an input device (14) of the vehicle (10), for example a display device at a vehicle dashboard (12).

10. The method according to one of the preceding claims,
**characterized in that**
a user of the vehicle will be notified by a display device at a vehicle dashboard (12), when no acknowledgment (a) from the backend device (20) was received at the vehicle (10) during the retry timer (t).

11. The method according to one of the preceding claims,
**characterized in that**
a confirmation and/or adjustment possibility of the at least one new value (ti) being set is provided for a user of the vehicle (10), especially by operating an input device (14) of the vehicle (10), for example a display device at a vehicle dashboard (12).

12. The method according to one of the preceding claims,
**characterized in that**
in or before the first sending of the hash message:
- a verification is carried out if sending is allowed according to different privacy settings; and/or
- a verification is carried out if sending is possible, wherein especially a communication test to the backend device (20) is carried out.

13. An electronic control unit (ecu) comprising:
a memory (mu), in which a program code is stored, and
a computing unit (cu), which when carrying out the program code by the computing unit (cu), is caused to perform a method according to one of the preceding claims.

14. A vehicle (10) comprising an electronic control unit (ecu) according to the preceding claim.

15. A computer program product comprising instructions which, when the program is executed by a computer, cause the computer to carry out a method according to any one of claims 1 to 12.

## Patentansprüche

1. Verfahren zur Synchronisierung einer Kommunikation (D) zwischen einem Fahrzeug (10) und einer Backend-Vorrichtung (20) in einem Fahrzeug-zu-Cloud-System (100), durch Übertragen von wichtigen Informationen, bei denen es sich um Informationen handelt, die für den Betrieb des Fahrzeugs erheblich oder wesentlich sind, wobei das Verfahren umfasst:
1) Senden einer Hash-Nachricht (m) von dem Fahrzeug (10) zu der Backend-Vorrichtung (20), wobei die Hash-Nachricht die wichtigen Informationen und einen oder mehrere Hash-Werte umfasst;
2) Einstellen eines Sperrwertes (t0) für einen Wiederholungs-Timer (t) zum Empfangen einer Bestätigung (a) von der Backend-Vorrichtung (20) am Fahrzeug (10), wobei die Bestätigung einen oder mehrere Hash-Werte umfasst, die mit dem einen oder den mehreren Hash-Werten der Hash-Nachricht übereinzustimmen sind;
3) Erneutes Senden der Hash-Nachricht (m) vom Fahrzeug (10) an die Backend-Vorrichtung (20) nach Ablauf des Wiederholungs-Timers (t), wenn keine Bestätigung (a) von der Backend-Vorrichtung (20) am Fahrzeug (10) empfangen wurde,
4) Einstellen zumindest eines neuen Wertes (ti) für den Wiederholungs-Timer (t) zum Empfangen einer Bestätigung (a) von der Backend-Vorrichtung (20) am Fahrzeug (10), wobei das erneute Senden der Hash-Nachricht und das Einstellen zumindest eines neuen Wertes für den Wiederholungs-Timer nach Ablauf des Wiederholungs-Timers (t) wiederholt wird, wenn keine Bestätigung (a) von der Backend-Vorrichtung (20) am Fahrzeug (10) empfangen wurde.

2. Verfahren nach Anspruch 1,
**dadurch gekennzeichnet, dass**
das Senden der Hash-Nachricht zumindest einen der folgenden Auslöser hat:
- die Zündung ist eingeschaltet,
- der Motor ist eingeschaltet,
- eine erfolgreiche Identifizierung eines autorisierten Benutzers des Fahrzeugs (10),
- eine neue Hash-Nachricht (m) ist verfügbar, und/oder
- Verlassen des Datenschutzmodus.

3. Verfahren nach einem der vorhergehenden Ansprüche,
**dadurch gekennzeichnet, dass**
das Senden einer Hash-Nachricht wiederholt wird, wenn beim Einstellen oder Zurücksetzen des Wiederholungs-Timers (t) die Bestätigungsnachricht (a) am Fahrzeug (10) empfangen wurde, aber zumindest ein Hash-Wert (va) der Bestätigung (a) nicht übereinstimmt mit
- zumindest einem entsprechenden Hash-Wert (vm) der Hash-Nachricht (m); oder
- einer Anforderung (r) von wichtigen Informationen und/oder wichtigen Informationen von der Backend-Vorrichtung (20) am Fahrzeug (10).

4. Verfahren nach einem der vorhergehenden Ansprüche,
**dadurch gekennzeichnet, dass**
eine erfolgreiche Synchronisierung (6) der Kommunikation (D) zwischen einem Fahrzeug (10) und einer Backend-Vorrichtung (20) bekräftigt wird, wenn während des Einstellens des Wiederholungs-Timers (t) auf den Sperrwert oder auf den zumindest einen neuen Wert die Bestätigungsnachricht (a) am Fahrzeug (10) empfangen wurde, und wenn alle Hash-Werte (va) der Bestätigung (a) mit allen entsprechenden Hash-Werten (vm) der Hash-Nachricht (m) übereinstimmen.

5. Verfahren nach einem der vorhergehenden Ansprüche, **dadurch gekennzeichnet, dass**
der zumindest eine neue Wert (ti) für den Wiederholungszeitgeber (t), der auf den zumindest einen neuen Wert eingestellt wird, eine unterschiedliche Dauer gemäß einer Anzahl von Wiederholungen (n) des erneuten Sendens der Hash-Nachricht (m) und des Einstellens des zumindest einen neuen Wertes für den Wiederholungszeitgeber (t) aufweist,
und/oder der zumindest eine neue Wert (ti) für den eingestellten Wiederholungs-Tiimer (t) eine längere Dauer mit zunehmender Anzahl von Wiederholungen (n) des erneuten Sendens der Hash-Nachricht (m) und des Einstellens des zumindest einen neuen Wertes für den Wiederholungs-Timer (t) aufweist.

6. Verfahren nach einem der vorhergehenden Ansprüche, **dadurch gekennzeichnet, dass**
die Hash-Nachricht (m) Zeitstempel beinhaltet,
und/oder die Hash-Nachricht (m) ein Paket von Nachrichten umfasst, für das eine Bestätigung (a) von der Backend-Vorrichtung (20) erforderlich ist.

7. Verfahren nach einem der vorhergehenden Ansprüche, **dadurch gekennzeichnet, dass**
der zumindest eine neue Wert (ti) einen ersten Wert (t1) in Bezug auf eine erste Wiederholung (1) des erneuten Sendens der Hash-Nachricht (m) und des Einstellens des zumindest einen neuen Wertes für den Wiederholungs-Timer (t) aufweist;
der zumindest eine neue Wert (ti) einen zweiten Wert (t2) in Bezug auf eine zweite Wiederholung (2) des erneuten Sendens der Hash-Nachricht (m) und des Einstellens des zumindest einen neuen Wertes für den Wiederholungs-Timer (t) aufweist;
der zumindest eine neue Wert (ti) einen dritten Wert (t3) in Bezug auf eine dritte Wiederholung (3) des erneuten Sendens der Hash-Nachricht (m) und des Einstellens des zumindest einen neuen Wertes für den Wiederholungs-Timer (t) aufweist;
der zumindest eine neue Wert (ti) einen vierten Wert (t4) in Bezug auf eine vierten Wiederholung (4) des erneuten Sendens der Hash-Nachricht (m) und des Einstellens des zumindest einen neuen Wertes für den Wiederholungs-Timer (t) aufweist;
wobei der erste Wert kleiner ist als der zweite Wert, der zweite Wert kleiner ist als der dritte Wert und der dritte Wert kleiner ist als der vierte Wert.

8. Verfahren nach einem der vorhergehenden Ansprüche, **dadurch gekennzeichnet, dass**
das erneute Senden der Hash-Nachricht (m) und das Einstellen des zumindest einen neuen Wertes für den Wiederholungs-Timer (t) eine bestimmte Anzahl von Wiederholungen (n), insbesondere zumindest viermal, wiederholt wird, und/oder das erneute Senden der Hash-Nachricht (m) und das Einstellen des zumindest einen neuen Wertes für den Wiederholungs-Timer (t) wiederholt wird, bis eine Bestätigung (a) von der Backend-Vorrichtung (20) am Fahrzeug (10) empfangen wird.

9. Verfahren nach einem der vorhergehenden Ansprüche, **dadurch gekennzeichnet, dass**
eine Bekräftigungs- und/oder Anpassungsmöglichkeit einer bestimmten Anzahl von Wiederholungen (n) für einen Benutzer des Fahrzeugs (10) bereitgestellt wird, insbesondere durch Bedienen einer Eingabevorrichtung (14) des Fahrzeugs (10), zum Beispiel einer Anzeigevorrichtung an einem Fahrzeug-Armaturenbrett (12) .

10. Verfahren nach einem der vorhergehenden Ansprüche, **dadurch gekennzeichnet, dass**
ein Benutzer des Fahrzeugs durch eine Anzeigevorrichtung am Armaturenbrett (12) des Fahrzeugs benachrichtigt wird, wenn während des Wiederholungs-Timers (t) keine Bestätigung (a) von der Backend-Vorrichtung (20) am Fahrzeug (10) empfangen wurde.

11. Verfahren nach einem der vorhergehenden Ansprüche, **dadurch gekennzeichnet, dass**
eine Bekräftigungs- und/oder Anpassungsmöglichkeit des zumindest einen neuen eingestellten Wertes (ti) für einen Benutzer des Fahrzeugs (10) bereitgestellt wird, insbesondere durch Bedienen einer Eingabevorrichtung (14) des Fahrzeugs (10), zum Beispiel einer Anzeigevorrichtung an einem Fahrzeug-Armaturenbrett (12) .

12. Verfahren nach einem der vorhergehenden Ansprüche, **dadurch gekennzeichnet, dass**
in oder vor dem ersten Senden der Hash-Nachricht:
- eine Verifizierung durchgeführt wird, wenn das Senden gemäß verschiedenen Datenschutz-Einstellungen erlaubt ist; und/oder
- eine Verifizierung durchgeführt wird, wenn das Senden möglich ist, wobei insbesondere ein Kommunikationstest zur Backend-Vorrichtung (20) durchgeführt wird.

13. Elektronische Steuereinheit (ecu), die Folgendes umfasst:
einen Speicher (mu), in dem ein Programmcode gespeichert ist, und
eine Recheneinheit (cu), die, wenn sie den Programmcode durch die Recheneinheit (cu) durchführt, veranlasst wird, ein Verfahren nach einem der vorhergehenden Ansprüche durchzuführen.

14. Fahrzeug (10), das eine elektronische Steuereinheit (ECU) nach dem vorhergehenden Anspruch umfasst.

15. Computerprogrammprodukt, umfassend Anleitungen, die, wenn das Programm von einem Computer ausgeführt wird, den Computer veranlassen, ein Verfahren nach einem der Ansprüche 1 bis 12 durchzuführen.

## Revendications

1. Procédé de synchronisation d'une communication (D) entre un véhicule (10) et un dispositif dorsal (20) dans un système de type véhicule vers cloud (100), par la transmission d'informations vitales étant des informations substantielles ou essentielles pour le fonctionnement du véhicule,
le procédé comprenant les étapes suivantes :
1) envoyer un message de hachage (m) du véhicule (10) au dispositif dorsal (20), le message de hachage comprenant les informations vitales et une ou plusieurs valeurs de hachage ;
2) définir une valeur d'inhibition (t0) pour un minuteur de réitération (t) pour la réception d'un accusé de réception (a) depuis le dispositif dorsal (20) au niveau du véhicule (10), l'accusé de réception comprenant une ou plusieurs valeurs de hachage à comparer aux une ou plusieurs valeurs de hachage du message de hachage ;
3) renvoyer le message de hachage (m) du véhicule (10) au dispositif dorsal (20) après expiration du minuteur de réitération (t), si aucun accusé de réception (a) en provenance du dispositif dorsal (20) n'a été reçu au niveau du véhicule (10) ;
4) définir au moins une nouvelle valeur (ti) pour le minuteur de réitération (t) pour la réception d'un accusé de réception (a) en provenance du dispositif dorsal (20) au niveau du véhicule (10),
dans lequel le renvoi du message de hachage et la définition d'au moins une nouvelle valeur pour le minuteur de réitération seront répétés après l'expiration du minuteur de réitération (t), si aucun accusé de réception (a) en provenance du dispositif dorsal (20) n'a été reçu au niveau du véhicule (10).

2. Procédé selon la revendication 1,
**caractérisé en ce que** l'envoi du message de hachage a au moins l'un des déclencheurs suivants :
un contact mis,
un moteur en marche,
une identification réussie d'un utilisateur autorisé du véhicule (10),
un nouveau message de hachage (m) disponible, et/ou la sortie d'un mode de confidentialité.

3. Procédé selon l'une des revendications précédentes, **caractérisé en ce que** :
l'envoi d'un message de hachage sera répété si, lors de la définition ou de la réinitialisation du minuteur de réitération (t), le message d'accusé de réception (a) a été reçu par le véhicule (10) , mais si au moins une valeur de hachage (va) de l'accusé de réception (a) ne correspond pas à :
- au moins une valeur de hachage (vm) correspondante du message de hachage (m) ; ou
- une demande (r) d'informations vitales et/ou d'informations vitales de la part du dispositif dorsal (20) au niveau du véhicule (10).

4. Procédé selon l'une des revendications précédentes, **caractérisé en ce que** :
une synchronisation réussie (6) de la communication (D) entre un véhicule (10) et un dispositif dorsal (20) sera confirmée si, pendant que le minuteur de réitération (t) est défini à la valeur d'inhibition ou défini à l'au moins une nouvelle valeur, le message d'accusé de réception (a) a été reçu par le véhicule (10), et si toutes les valeurs de hachage (va) de l'accusé de réception (a) correspondent à toutes les valeurs de hachage correspondantes (vm) du message de hachage (m).

5. Procédé selon l'une des revendications précédentes, **caractérisé en ce que** :
l'au moins une nouvelle valeur (ti) pour le minuteur de réitération (t) étant fixée à l'au moins une nouvelle valeur a des durées différentes en fonction d'un nombre de répétitions (n) de réexpédition du message de hachage (m) et de définition de l'au moins une nouvelle valeur pour le minuteur de réitération (t), et/ou l'au moins une nouvelle valeur (ti) pour le minuteur de réitération (t) a une durée plus longue lorsque le nombre de répétitions (n) de réexpédition du message de hachage (m) et de définition de l'au moins une nouvelle valeur pour le minuteur de réitération (t) augmente.

6. Procédé selon l'une des revendications précédentes, **caractérisé en ce que** :
le message de hachage (m) comprend des horodatages,
et/ou le message de hachage (m) comprend un ensemble de messages pour lesquels un accusé de réception (a) est requis de la part du dispositif dorsal (20).

7. Procédé selon l'une des revendications précédentes, **caractérisé en ce que** :
l'au moins une nouvelle valeur (ti) a une première valeur (t1) par rapport à une première répétition (1) de réexpédition du message de hachage (m) et de définition de l'au moins une nouvelle valeur pour le minuteur de réitération (t) ;
l'au moins une nouvelle valeur (ti) a une deuxième valeur (t2) par rapport à une deuxième répétition (2) de réexpédition du message de hachage (m) et de définition de l'au moins une nouvelle valeur pour le minuteur de réitération (t) ;
l'au moins une nouvelle valeur (ti) a une troisième valeur (t3) par rapport à une troisième répétition (3) de réexpédition du message de hachage (m) et de définition de l'au moins une nouvelle valeur pour le minuteur de réitération (t) ;
l'au moins une nouvelle valeur (ti) a une quatrième valeur (t4) par rapport à une quatrième répétition (4) de réexpédition du message de hachage (m) et de définition de l'au moins une nouvelle valeur pour le minuteur de réitération (t) ;
la première valeur étant inférieure à la deuxième valeur, la deuxième valeur étant inférieure à la troisième valeur et la troisième valeur étant inférieure à la quatrième valeur.

8. Procédé selon l'une des revendications précédentes, **caractérisé en ce que** :
la réexpédition du message de hachage (m) et la définition de l'au moins une nouvelle valeur pour le minuteur de réitération (t) seront répétées un nombre déterminé de fois (n), en particulier au moins quatre fois, et/ou la réexpédition du message de hachage (m) et la définition de l'au moins une nouvelle valeur pour le minuteur de réitération (t) seront répétées jusqu'à ce que le véhicule (10) reçoive un accusé de réception (a) de la part du dispositif dorsal (20).

9. Procédé selon l'une des revendications précédentes, **caractérisé en ce que** :
une confirmation et/ou une possibilité d'ajustement d'un nombre déterminé de répétitions (n) sont fournies à un utilisateur du véhicule (10), notamment en actionnant un dispositif d'entrée (14) du véhicule (10), par exemple un dispositif d'affichage sur le tableau de bord du véhicule (12).

10. Procédé selon l'une des revendications précédentes, **caractérisé en ce que** :
un utilisateur du véhicule sera notifié par un dispositif d'affichage sur le tableau de bord du véhicule (12), lorsqu'aucun accusé de réception (a) en provenance du dispositif dorsal (20) n'a été reçu au niveau du véhicule (10) pendant le minuteur de réitération (t).

11. Procédé selon l'une des revendications précédentes, **caractérisé en ce que** :
une confirmation et/ou une possibilité d'ajustement d'au moins la nouvelle valeur (ti) étant définie est fournie à un utilisateur du véhicule (10), notamment en actionnant un dispositif d'entrée (14) du véhicule (10), par exemple un dispositif d'affichage sur le tableau de bord du véhicule (12).

12. Procédé selon l'une des revendications précédentes, **caractérisé en ce que** :
lors du premier envoi du message de hachage, ou avant celui-ci :
- une vérification est effectuée si l'envoi est autorisé en fonction de différents paramètres de confidentialité ; et/ou
- une vérification est effectuée si l'envoi est possible, en particulier un test de communication avec le dispositif dorsal (20).

13. Unité de commande électronique (ecu) comprenant :
une mémoire (mu), dans laquelle est stocké un code de programme, et
une unité de calcul (cu) qui, lors de l'exécution du code de programme par l'unité de calcul (cu), est amenée à exécuter un procédé selon l'une des revendications précédentes.

14. Véhicule (10) comprenant une unité de commande électronique (ecu) selon la revendication précédente.

15. Produit programme d'ordinateur comprenant des instructions qui, lorsque le programme est exécuté par un ordinateur, amènent l'ordinateur à exécuter un procédé selon l'une quelconque des revendications 1 à 12.
